# EUROPÄISCHE PATENTSCHRIFT

(11) **EP 0 682 967 B1**
(45) Veröffentlichungstag und Bekanntmachung des Hinweises auf die Patenterteilung: **14.07.1999**
(21) Anmeldenummer: 95106297.5
(22) Anmeldetag: 27.04.1995
(51) Int. Cl.: B01D 27/06, B01D 29/19, B01D 46/52

(54) **Ringförmiger Stützkörper für einen ringförmigen Filtereinsatz**
Tubular supporting body for an annular filtering insert
Corps d'appui tubulaire pour un élément filtrant annulaire

(30) Priorität: 18.05.1994 DE 4417298; 11.10.1994 DE 4436228
(43) Veröffentlichungstag der Anmeldung: 22.11.1995
(73) Patentinhaber: KNECHT FILTERWERKE GMBH, 70376 Stuttgart (DE)
(72) Erfinder: Baumann, Peter, D-70565 Stuttgart (DE); Metzger, Peter, Dr., D-71272 Renningen (DE); Noack, Dieter, D-74321 Bietigheim-Bissingen (DE); Schneider, Horst, D-71336 Waiblingen (DE); Waibel, Hans, D-70378 Stuttgart (DE)
(74) Vertreter: Patentanwalts-Partnerschaft Rotermund + Pfusch

(56) Entgegenhaltungen:
- CH-A- 675 545
- DE-B- 2 227 378
- GB-A- 2 140 317
- US-A- 3 752 321
- US-A- 4 507 200
- US-A- 4 521 309

## Beschreibung

Die Erfindung betrifft einen rohrförmigen Stützkörper für einen Filtereinsatz nach dem Oberbegriff des Anspruchs 1.

Solche Stützkörper sind aus CH-A-675 545 und DE-A-39 21 369 bekannt.

Hiervon ausgehend beschäftigt sich die Erfindung mit dem Problem, einen rohrförmigen Stützkörper zu schaffen, auf dem bei einem aufgesetzten Filtereinsatz die Falten eines sternförmig gefalteten Filterelementes gegen unerwünschte Querbewegungen geschützt sind. Bei einem gattungsgemäßen, rohrförmigen Stützkörper wird dieses Problem erfindungsgemäß durch eine Ausbildung mit den kennzeichnenden Merkmalen des Patentanspruchs 1 gelöst.

Bei der erfindungsgemäßen Ausbildung liegt ein auf den rohrförmigen Stützkörper aufgebrachtes Filterelement mit seinen Faltkanten in Umfangsrichtung unverschiebbar an dem Stützkörper an. Dadurch bleiben insbesondere bei an dem Filterelement herrschenden großen Differenzdrücken eine schädliche Faltenbewegung und ein Kollabieren des Filterelementes sicher aus. Die Erfindung sichert damit eine hohe Stabilität des Filtereinsatzes und garantiert eine störungsfreie Funktion. Der rohrförmige Stützkörper ist äußerst rationell und damit kostengünstig aus Kunststoff herstellbar.

Vorteilhafte Ausgestaltungen der Erfindung sind Gegenstand der Unteransprüche.

Grundsätzlich gelöst wird dieses Problem mit einem rohrförmigen Stützkörper mit den Merkmalen nach dem Kennzeichen des Anspruchs 1.

Vorteilhafte Ausgestaltungen der Erfindung sind in den Unteransprüchen enthalten.

Zum Stand der Technik ist noch auf die DE-B- 22 27 378 hinzuweisen, aus der ein Filtereinsatz bekannt ist, bei dem ein flexibel verformbarer Träger vorgesehen ist, an dem nach außen abstehende Reihen von Fingern angeordnet sind, die in Falten des Faltenfilterelementes eingreifen und dieses gespreizt halten. Hierfür ist einerseits eine aufwendige Konstruktion des Trägers notwendig und andererseits ist der Zusammenbau von Filterelement und Träger kompliziert und aufwendig.

Ausführungsbeispiele der Erfindung sind in der Zeichnung dargestellt und werden mit Bezug auf diese nachstehend noch näher erläutert.

Es zeigen
- Fig. 1: einen erfindungsgemäßen Stützkörper in Seitenansicht im Schnitt,
- Fig. 2: eine Draufsicht nach Schnitt II-II gem. Fig. 1,
- Fig. 3: eine vergrößerte Darstellung der Ansicht Z gemäß Fig. 2,
- Fig. 4: ein zweites Ausführungsbeispiel eines erfindungsgemäßen Stützkörpers in Seitenansicht im Schnitt,
- Fig. 5: eine Draufsicht nach Schnitt V-V gem. Fig. 4
- Fig. 6: eine vergrößerte Darstellung der Ansicht X gem. Fig. 5,
- Fig. 7: eine alternative Stützkörperausführung je zur Hälfte im Schnitt und in der Ansicht,
- Fig. 8: eine vergrößerte Darstellung des Ausschnitts A in Fig. 7.

Ein rohrförmiger Stützkörper 1 aus Kunststoff - hier als Innenzarge ausgebildet - für einen radial durchströmten ringförmigen Filtereinsatz mit sternförmig gefaltetem Filterelement aus einer gefalteten Filterpapierbahn besteht aus axial beabstandeten umlaufenden Stützringen 2, die über auf dem Umfang verteilte Längsrippen 3 miteinander verbunden sind. Zur Stabilisierung und Lagefixierung des Filterelementes sind auf der äußeren Stirnseite der Stützringe als flache Profilierung 4 ausgebildete Längsrillen 5 vorgesehen, die die in Längsrichtung verlaufenden Faltkanten des Filterelementes in Umfangsrichtung gesehen formschlüssig über eine gewisse geringe Höhe umfassen. Die Profilierung 4 ist beispielhaft in der Form von Längsrillen ausgeführt, wobei die Anzahl der Längsrillen 5 in Umfangsrichtung gesehen der Anzahl der Faltkanten des Filterelementes entspricht.

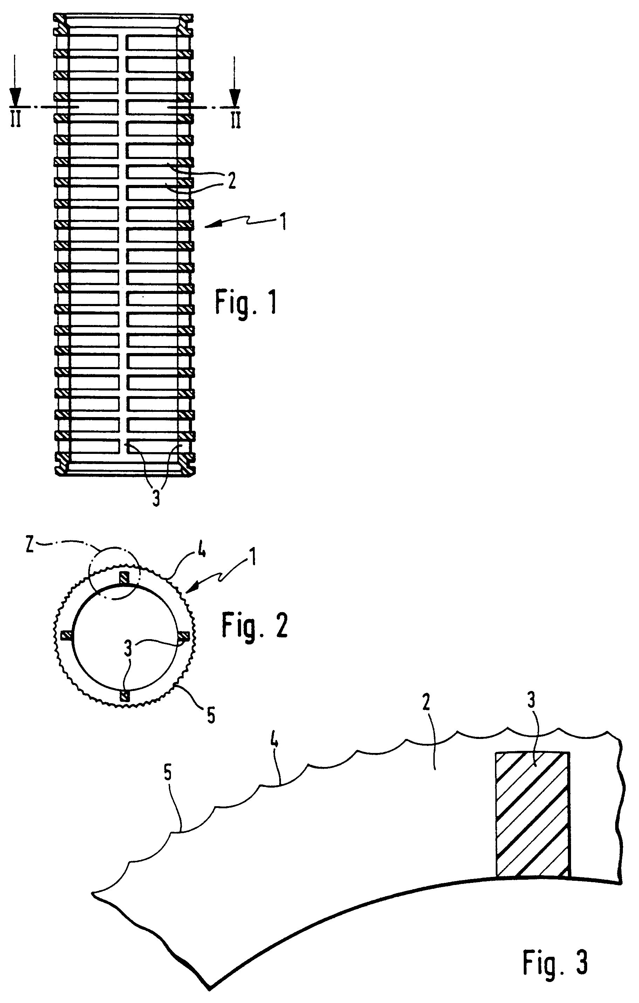

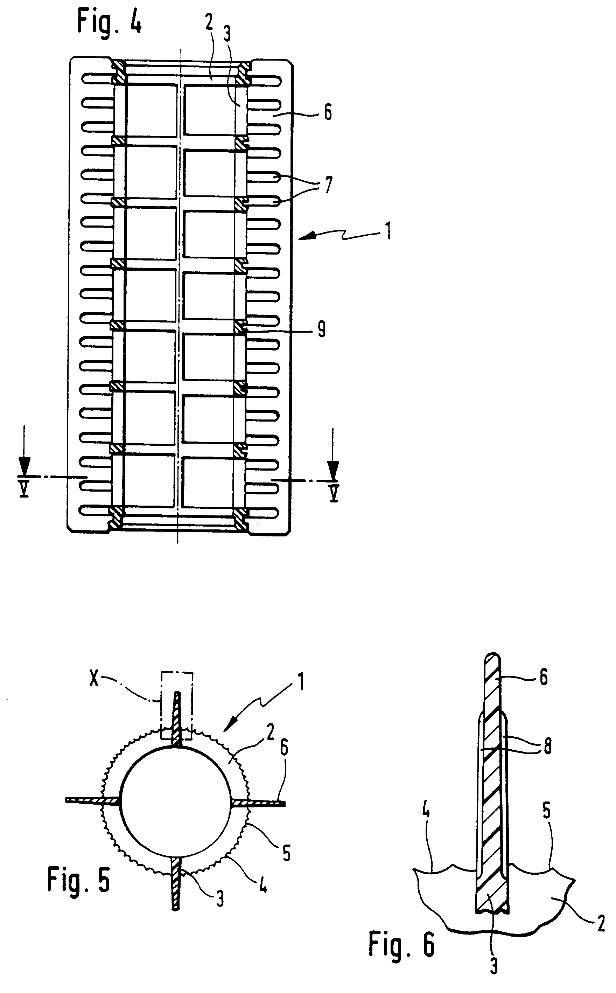

Das Ausführungsbeispiel gemäß Fig. 4 - 6 unterscheidet sich von dem gemäß Fig. 1 - 3 dadurch, daß zusätzlich an die Längsrippen 3 schwertförmige Leisten 6 einstückig angeformt sind, die jeweils in eine offene Falte des Filterelementes eingreifen, um dieses zusätzlich zu stabilisieren. Zur Gewichtserleichterung können die Leisten 6 mit Ausnehmungen 7 versehen sein. Um die Filtrationsfläche des Filterelementes nicht unnötigerweise zu verringern, können die Leisten 6 mit als Abstandshalter dienenden Nocken 8 versehen sein, wie sie beispielsweise von Filterelementen mit Papierprägung her bekannt sind.

Außerdem kann die Leiste 6 in Längsrichtung des Stützkörpers 1 gesehen segment- oder kammartig ausgebildet sein.

Gemäß Fig. 4 weisen die Stützringe 2 auf der linken Zeichnungshälfte einen anderen Querschnitt als auf der rechten Zeichnungshälfte auf. Mit den U-förmigen Stützringen 9 (gemäß rechter Zeichnungshälfte Fig. 4) wird mit geringem Materialaufwand ein Maximum an Festigkeit erreicht.

Mit den aufgezeigten Ausführungen wird auf konstruktiv einfache Weise ein Stützkörper für ein sternförmig gefaltetes Filterelement eines radial durchströmten Ringfilters für Flüssigkeiten geschaffen, bei dem ein geringer Durchflußwiderstand erreicht und ein Kollabieren des Filterelementes im Bereich der Innenzarge sowie eine Faltenbewegung verhindert wird.

Die aus Kunststoff bestehenden Stützkörper werden üblicherweise im Spritzgußverfahren hergestellt. Eine kostengünstige Art der Herstellung besteht erfindungsgemäß in einem Extrusions- oder Blasformverfahren.

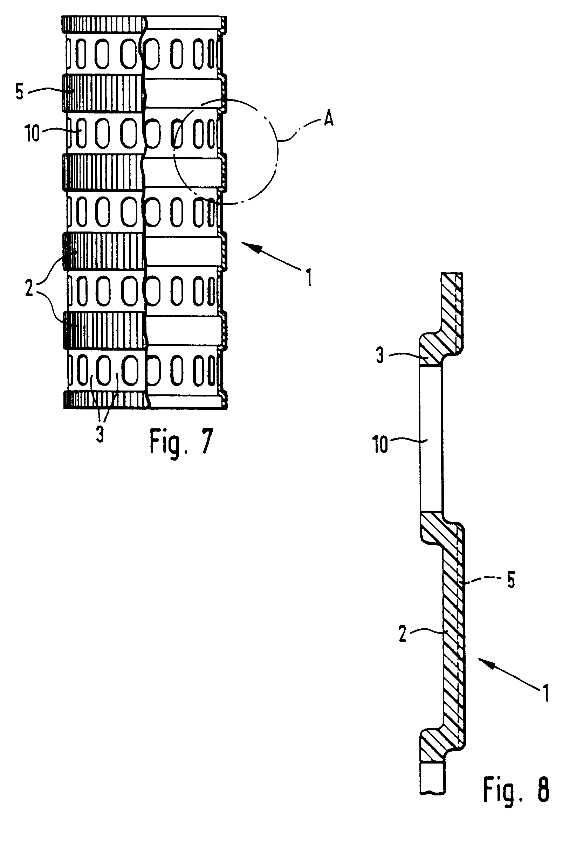

Der ebenfalls aus Kunststoff bestehende Stützkörper nach Fig. 7 ist beispielsweise im Extrusions- bzw. Blasformverfahren hergestellt.

Jener Stützkörper 1 besteht aus axial beabstandeten, als Sicken ausgebildeten umlaufenden Stützringen 2, die über eine Art auf dem Umfang verteilte Längsrippen 3 miteinander verbunden sind, wobei zwischen den Längsrippen 3 elliptische Durchbrechungen 10 vorgesehen sind. Zur Stabilisierung und Lagefixierung des Filterelementes sind auf der äußeren Stirnseite der Stützringe 2 wiederum als flache Profilierung ausgebildete Längsrillen 5 vorgesehen, die die in Längsrichtung verlaufenden Faltkanten eines nicht dargestellten Filterelementes in Umfangsrichtung gesehen formschlüssig über eine gewisse geringe Höhe umfassen. Die Anzahl der Längsrillen 5 in Umfangsrichtung gesehen entspricht der Anzahl der Faltkanten des Filterelementes.

Durch die Anwendung des Extrusions- bzw. Blasformverfahrens zur Herstellung insbesondere eines Stützkörpers nach Fig. 7 kann dieser besonders preisgünstig hergestellt werden.

## Patentansprüche

1. Verwendung eines rohrförmigen, mit Durchbrechungen versehenen Stützkörpers für einen radial durchströmten, ringförmigen Filtereinsatz mit sternförmig gefaltetem Filterelement, insbesondere aus einer gefalteten Filterbahn,
**dadurch gekennzeichnet**,
daß die Oberfläche des Stützkörpers (1) zur Verhinderung von Querbewegungen der Falten des Filterelementes als eine von Längsrillen (5) gebildete Profilierung (4) im Sinne einer Aufrauung ausgebildet ist, wobei die Faltkanten des Filterelementes an dem Grund der Längsrillen (5) anliegen.

2. Verwendung eines rohrförmigen Stützkörpers nach Anspruch 1,
**dadurch gekennzeichnet**,
daß auf dem Umfang verteilte, längs verlaufende, schwertförmige Leisten (6) am Stützkörper (1) einstückig angeformt sind.

3. Verwendung eines rohrförmigen Stützkörpers nach Anspruch 2,
**dadurch gekennzeichnet**,
daß die Leisten (6) mit Ausnehmungen (7) versehen sind.

4. Verwendung eines rohrförmigen Stützkörpers nach Anspruch 2 oder 3,
**dadurch gekennzeichnet**,
daß die Leisten (6) kammartig ausgebildet sind.

5. Verwendung eines rohrförmigen Stützkörpers nach den Ansprüchen 2 bis 4,
**dadurch gekennzeichnet**,
daß die Leisten (6) in Längsrichtung segmentartig ausgebildet sind.

6. Verwendung eines rohrförmigen Stützkörpers nach den Ansprüchen 2 bis 5,
**dadurch gekennzeichnet**,
daß die Leisten (6) mit Abstandsnocken (8) versehen sind.

7. Verwendung eines rohrförmigen Stützkörpers nach einem der vorhergehenden Ansprüche,
**dadurch gekennzeichnet**,
daß der Stützkörper (1) als Sicken ausgebildete, axial beabstandete umlaufende Stützringe (2) zur Bildung der Anlagefläche für die Falten eines Faltenelementes aufweist.

8. Verwendung eines rohrförmigen Stützkörpers nach einem der vorhergehenden Ansprüche,
**dadurch gekennzeichnet**,
daß der Stützkörper (1) im Extrusions- oder Blasrohrverfahren hergestellt ist.

## Claims

1. Use of a tubular support member provided with openings for an annular radially permeated filter insert with a radially folded filter element, in particular from a folded filter web, characterised in that in order to prevent transverse movements of the folds of the filter element the surface of the support member (1) is designed as profiling (4) formed by longitudinal grooves (5) in the sense of a roughened area, the folded edges of the filter element lying on the bottom of the longitudinal grooves (5).

2. Use of a tubular support member according to claim 1, characterised in that longitudinally extending sword-shaped rails (6), distributed over the circumference, are moulded integrally on the support member.

3. Use of a tubular support member according to claim 2, characterised in that the rails (6) are provided with recesses (7).

4. Use of a tubular support member according to claim 2 or 3, characterised in that the rails (6) are designed in the manner of a comb.

5. Use of a tubular support member according to claims 2 to 4, characterised in that the rails (6) are designed in the manner of segments in the longitudinal direction.

6. Use of a tubular support member according to claims 2 to 5, characterised in that the rails (6) are provided with spacer cams (8).

7. Use of a tubular support member according to one of the preceding claims, characterised in that the support member (1) has circumferential axially spaced supporting rings (2) designed as beads, to form the bearing surface for the folds of a fold element.

8. Use of a tubular support member according to one of the preceding claims, characterised in that the support member (1) is produced by extrusion moulding or blow moulding.

## Revendications

1. Utilisation d'un corps d'appui tubulaire à jours pour une cartouche filtrante annulaire traversée radialement à élément filtrant plié en étoile, en particulier formé d'une bande filtrante pliée, caractérisée par le fait que la surface du corps d'appui (1), pour empêcher des mouvements transversaux des plis de l'élément filtrant, a un profilage (4) formé de cannelures longitudinales (5) dans le sens d'une production de rugosité et les arêtes de pliage de l'élément filtrant s'appuient sur le fond de ces cannelures longitudinales (5).

2. Utilisation d'un corps d'appui tubulaire selon la revendication 1, caractérisée par le fait que des barrettes en forme d'épée (6) s'étendant longitudinalement et réparties sur le pourtour sont faites sur le corps d'appui (1).

3. Utilisation d'un corps d'appui tubulaire selon la revendication 2, caractérisée par le fait que les barrettes (6) sont pourvues d'évidements (7).

4. Utilisation d'un corps d'appui tubulaire selon l'une des revendications 2 et 3, caractérisée par le fait que les barrettes (6) sont du genre peigne.

5. Utilisation d'un corps d'appui tubulaire selon les revendications 2 à 4, caractérisée par le fait que les barrettes (6) sont du genre segment dans la direction longitudinale.

6. Utilisation d'un corps d'appui tubulaire selon les revendications 2 à 5, caractérisée par le fait que les barrettes (6) sont pourvues de saillies d'écartement (8).

7. Utilisation d'un corps d'appui tubulaire selon l'une des revendications précédentes, caractérisée par le fait que le corps d'appui (1) présente des anneaux d'appui (2) espacés axialement et formant des moulures pour la formation de la surface d'appui des plis d'un élément filtrant.

8. Utilisation d'un corps d'appui tubulaire selon l'une des revendications précédentes, caractérisée par le fait que le corps d'appui (1) est fabriqué par extrusion ou par moulage par soufflage.
